# EUROPÄISCHE PATENTANMELDUNG

(11) **EP 1 471 485 A1**
(43) Veröffentlichungstag der Anmeldung: **27.10.2004**
(21) Anmeldenummer: 04009541.6
(22) Anmeldetag: 22.04.2004
(51) Int. Cl.: G09B 19/00, G09B 1/00, G07F 7/10, G07C 9/00

(54) **Vorrichtung und Verfahren zur Codierung und Decodierung von Zahlen- und/oder Buchstabenkombinationen**

(30) Priorität: 22.04.2003 DE 20306295 U; 25.08.2003 DE 20313114 U
(71) Anmelder: JP Dachgestaltung GmbH, 81929 München (DE)
(72) Erfinder: Probst, Hans-Jürgen, 85560 Ebersberg (DE)
(74) Vertreter: Hofstetter, Alfons J., Dr.rer.nat.

(57) **Zusammenfassung**

Die vorliegende Erfindung betrifft eine Vorrichtung zur Codierung und Decodierung von Zahlen- und/oder Buchstabenkombinationen, insbesondere zur Codierung und Decodierung von Pin-Codes. Die Vorrichtung (10) besteht dabei aus einer Decodier-Karte (12) und einem Codenummernfeld (14), wobei die Decodier-Karte (12) mindestens eine Tabelle (16) jeweils bestehend aus mindestens zwei Zeilen (18) und Spalten (20) zur Definition einer Vielzahl von Feldern (22) aufweist und in den Feldern (22) Buchstaben und Zahlen zufällig angeordnet sind und auf der Decodier-Karte (12) ein vordefinierter erster Bezugspunkt (24) ausgebildet ist und das Codenummernfeld (14) aus einem karierten Feld (26) mit einer Vielzahl von Einzelfeldern (28) besteht und in den Einzelfeldern (28) ein Schlüssel (30) zur Ablesereihenfolge der auf der Decodier-Karte (12) dargestellten Buchstaben und Zahlen ausgebildet ist, wobei zur Decodierung der Zahlen- und/oder Buchstabenkombination der erste Bezugspunkt (24) der Decodier-Karte (12) auf einen zweiten Bezugspunkt (30) des Codenummernfelds (14) überlappend aufgebracht wird und die Decodier-Karte (12) und/oder das Codenummernfeld (14) transparent ausgebildet ist. Die Erfindung betrifft weiterhin ein Verfahren zur Codierung und Decodierung von Zahlen- und/oder Buchstabenkombinationen, insbesondere zur Codierung und Decodierung von Pin-Codes.

## Beschreibung

Die vorliegende Erfindung betrifft eine Vorrichtung zur Codierung und Decodierung von Zahlen- und/oder Buchstabenkombinationen, insbesondere zur Codierung und Decodierung von Pin-Codes. Die Erfindung betrifft weiterhin ein Verfahren zur Codierung und Decodierung von Zahlen- und/oder Buchstabenkombinationen, insbesondere zur Codierung und Decodierung von Pin-Codes.

ln immer größerem Maße besteht die Notwendigkeit, sich Zahlen- und/oder Buchstabenkombinationen, insbesondere sogenannte Pin-Codes zur Ausführung von Transaktionen zu merken und entsprechend zu verwenden. Bei elektronischen Geldtransaktionen, wie z.B. das Abheben oder das Überweisen von Geld wie auch bei der Durchführung bestimmter Verfahren im Internet werden zur sicheren Identifizierung des Anwenders entsprechende Codes oder Geheimzahlen verwendet. Aufgrund der immer größer werdenden Anzahl unterschiedlicher Codes und Geheimzahlen ist es jedoch für den Anwender nur sehr schwer möglich, diese sich auswendig zu merken. Das Notieren oder Hinterlegen der Pin-Codes oder Geheimzahlen birgt jedoch die Gefahr in sich, dass unbefugte Dritte von diesen Kenntnis erlangen können und entsprechende Transaktionen zum Schaden des Anwenders durchführen können.

Es ist daher die Aufgabe der vorliegenden Erfindung eine gattungsgemäße Vorrichtung zur Codierung und Decodierung von Zahlen- und/oder Buchstabenkombinationen bereitzustellen, welche einfach herstellbar ist und eine sichere Codierung und Decodierung von Zahlen- und/oder Buchstabenkombinationen ermöglicht.

Es ist weiterhin Aufgabe der vorliegenden Erfindung ein gattungsgemäßes Verfahren zur Codierung und Decodierung von Zahlen- und/oder Buchstabenkombinationen bereitzustellen, welches eine sichere Codierung und Decodierung von Zahlen- und/oder Buchstabenkombinationen ermöglicht.

Zur Lösung dieser Aufgaben dienen eine Vorrichtung gemäß den Merkmalen des Anspruches1 sowie ein Verfahren gemäß den Merkmalen des Anspruches 10.

Vorteilhafte Ausgestaltungen sind in den jeweiligen Unteransprüchen beschrieben.

Eine erfindungsgemäße Vorrichtung zur Codierung und Decodierung von Zahlenund/oder Buchstabenkombinationen, insbesondere zur Codierung und Decodierung von sogenannten Pin-Codes besteht aus einer Decodier-Karte und einem Codenummernfeld. Die Decodier-Karte weist dabei mindestens eine Tabelle bestehend aus jeweils mindestens zwei Zeilen und Spalten zur Definition einer Vielzahl von Feldern auf. ln diesen Feldern sind Buchstaben und Zahlen zufällig angeordnet. Des Weiteren ist auf der Decodier-Karte ein vordefinierter erster Bezugspunkt ausgebildet. Das Codenummernfeld besteht aus einem tabellarisch aufgeteilten Feld mit einer Vielzahl von Feldern, wobei in den Feldern ein Schlüssel zur Ablesereihenfolge der auf der Decodier-Karte dargestellten Buchstaben und Zahlen ausgebildet ist. Zur Decodierung der Zahlen- und/oder Buchstabenkombinationen wird der erste Bezugspunkt der Decodier-Karte auf einen zweiten Bezugspunkt des Codenummernfelds überlappend aufgebracht. Dabei ist die Decodier-Karte und/oder das Codenummernfeld transparent ausgebildet.

ln einer vorteilhaften Ausgestaltung der erfindungsgemäßen Vorrichtung weist die Tabelle der Decodier-Karte einen Spalten- und Zeilenkopf auf, wobei die einzelnen Spalten und Zeilen jeweils mit einem Symbol, insbesondere mit figurativen Elementen, Sonderzeichen, Buchstaben und Zahlen bezeichnet sind. Der erste und/oder der zweite Bezugspunkt können als feststehende Markierung auf der Decodier-Karte und dem Codenummernfeld ausgebildet sein. Es ist aber auch möglich, dass eine Kombination aus mindestens einer Spaltenbezeichnung mit mindestens einer Zeilenbezeichnung den ersten Bezugspunkt ausbildet. Der zweite Bezugspunkt kann auch der Schnittpunkt einer Spalte mit einer Zeile in oder außerhalb des Feldes des Codenummernfeldes sein. Damit ist eine erfindungsgemäße Vorrichtung geschaffen, die eine sichere Codierung und Decodierung von Zahlen- und/oder Buchstabenkombinationen ermöglicht. lnsbesondere ist für die Decodierung kein elektrisches Gerät oder Vergleichbares erforderlich. Es genügt die Decodier-Karte und das Codenummernfeld. Das Codenummernfeld kann z.B. auf Bank-Karten, am Handy, am Computer, Fernbedingungsanleitungen, an Schlössern oder dem jeweiligen zu benutzenden elektronischen oder elektrischen Gerät angeordnet sein. Des Weiteren ist es möglich, Abstufungen von geringer bis hoher Sicherheit vorzugeben, da beliebige Zahlen- und/oder Buchstabenkombinationen codiert und decodiert werden können.

In einer weiteren vorteilhaften Ausgestaltung der erfindungsgemäßen Vorrichtung besteht der Schlüssel aus farbig unterlegten Feldern, wobei sich die Ablesereihenfolge durch eine den einzelnen Feldern zugeordneten Zahlenfolge ergibt. Es ist aber auch möglich, dass der Schlüssel aus verschiedenfarbig unterlegten Feldern besteht, wobei sich die Ablesereihenfolge durch eine auf dem Codenummernfeld festgelegten Farbabfolge ergibt. Schließlich ist es auch möglich, dass der Schlüssel aus verschiedenfarbig unterlegten Feldern besteht, wobei sich die Ablesereihenfolge durch eine den einzelnen Feldern zugeordnete Farbabfolge und einer den einzelnen Feldern zugeordneten Zahlenabfolge ergibt. Durch die vorteilhafte und erfindungemäße Ausgestaltung der Schlüssel zur Bildung der Ablesereihenfolge ist ebenfalls eine sichere Codierung und Decodierung von Zahlen- und/oder Buchstabenkombinationen möglich. Insbesondere erlaubt die erfindungsgemäße Vorrichtung, dass der Benutzer den Schlüssel selbst kreieren kann. Dazu stehen ihm - wie oben erwähnt - verschiedene Möglichkeiten zur Verfügung, die frei wählbar sind. Insbesondere die Verwendung von Farbabfolgen für die Ablesereihenfolge der Zahlen- und/oder Buchstabenkombinationen erlaubt eine einfache und für den Benutzer leicht verständliche Decodierung.

In einer weiteren vorteilhaften Ausgestaltung der Erfindung ist das Codenummernfeld als Aufkleber ausgebildet. Damit ist es möglich, dass z.B. Bank-Karten, Handys, Computer, Schlösser nachträglich mit der erfindungsgemäßen Vorrichtung ausgerüstet werden.

Ein erfindungsgemäßes Verfahren zur Codierung und Decodierung von Zahlenund/oder Buchstabenkombinationen, insbesondere zur Codierung und Decodierung von Pin-Codes umfasst folgende Schritte:
(a) Bereitstellung einer Decodier-Karte umfassend mindestens eine Tabelle bestehend aus jeweils mindestens zwei Zeilen und Spalten zur Definition einer Vielzahl von Feldern, wobei in den Feldern Buchstaben und Zahlen zufällig angeordnet sind und auf der Decodier-Karte ein vordefinierter erster Bezugspunkt ausgebildet ist;
(b) Bereitstellung eines Codenummernfeldes bestehend aus einem tabellarischen eingeteilten Feld mit einer Vielzahl von Einzelfeldern, wobei in den Einzelfeldern ein Schlüssel zur Ablesereihenfolge der auf der Decodier-Karte dargestellten Buchstaben und Zahlen ausgebildet ist;
(c) Auflegen der Decodier-Karte auf das Codenummerfeld, wobei der erste Bezugspunkt mit einem zweiten Bezugspunkt des Codenummernfeldes zur Deckung kommt und 2
(d) Ablesen der mit Hilfe des Schlüssels angezeigten Zahlen- und/oder Buchstabenkombination.

Ein derartiges erfindungsgemäßes Verfahren erlaubt eine sichere Codierung und Decodierung von Zahlen- und/oder Buchstabenkombinationen. Zur Codierung und Decodierung kann die Tabelle der Decodier-Karte einen Spalten- und Zeilenkopf aufweisen, wobei die einzelnen Spalten und Zeilen jeweils mit einem Symbol, insbesondere mit figurativen Elementen, Sonderzeichen, Buchstaben und Zahlen bezeichnet sind. Der erste Bezugspunkt kann dabei aus einer Kombination aus mindestens einer Spaltenbezeichnung mit mindestens einer Zeilenbezeichnung ausgebildet werden. Es ist aber auch möglich, dass der erste und/oder der zweite Bezugspunkt als feststehende Markierung auf der Decodier-Karte mit dem Codenummernfeld ausgebildet sind. Eine weitere Möglichkeit besteht darin, dass der zweite Bezugspunkt der Schnittpunkt einer Spalte mit einer Zeile in oder außerhalb des Feldes des Codenummernfeldes ist.

Der Schlüssel zum Ablesen der codierten Zahlen- und/oder Buchstabenkombinationen kann sich aus verschiedenfarbig unterlegten Feldern zusammensetzen, wobei sich die Ablesereihenfolge durch eine auf dem Codenummernfeld festgelegten Farbabfolge ergibt. Es ist aber auch möglich, dass der Schlüssel aus farbig oder nicht farbig unterlegten Feldern besteht, wobei sich die Ablesereihenfolge jedoch aus einer den einzelnen Feldern zugeordneten Zahlenfolge ergibt. In einer weiteren vorteilhaften Möglichkeit des erfindungsgemäßen Verfahrens besteht der Schlüssel aus verschiedenfarbig unterlegten Feldern, wobei sich die Ablesereihenfolge durch eine den einzelnen Feldern zugeordneten Farbabfolge und einer den einzelnen Feldern zugeordneten Zahlenfolge ergibt.

In einer weiteren vorteilhaften Ausgestaltung des erfindungsgemäßen Verfahrens wird im Verfahrensschritt (c) das Codenummernfeld auf die Decodier-Karte aufgelegt.

Die Vorteile des erfindungsgemäßen Verfahrens entsprechen denjenigen, die im Bezug auf die erfindungsgemäße Vorrichtung zur Codierung und Decodierung von Zahlen- und/oder Buchstabenkombinationen im Vorhergehenden besprochen worden sind.

Verwendung findet die erfindungsgemäße Vorrichtung und das erfindungsgemäße Verfahren insbesondere bei der Decodierung und Codierung von Zahlen- und/oder Buchstabenkombinationen im Bereich des sogenannten Electronic Banking, für Pin-Codes von Bank-Karten, Handys, Computer oder auch Zahlenschlösser. Die erfindungsgemäße Vorrichtung und das erfindungsgemäße Verfahren können praktisch für jede Anwendung, bei der eine codierte Zahlen- und/oder Buchstabenkombination Verwendung findet, eingesetzt werden.

Weitere Einzelheiten, Merkmale und Vorteile der Erfindung ergeben sich aus den in den Figuren dargestellten Ausführungsbeispielen. Es zeigen
- Figur 1: eine schematische Darstellung einer erfindungsgemäßen Vorrichtung zur Codierung und Decodierung von Zahlenund/oder Buchstabenkombinationen;
- Figur 2: eine schematische Darstellung einer Decodier-Karte der Vorrichtung gemäß Figur 1;
- Figuren 3a - 3d: schematische Darstellungen von vier Ausführungsbeispielen von Codenummernfeldern einer erfindungsgemäßen Vorrichtung; und
- Figur 4: eine schematische Darstellung des auf einen Codenummernfeldträger aufgebrachten Codenummernfeldes gemäß Figur 3b.

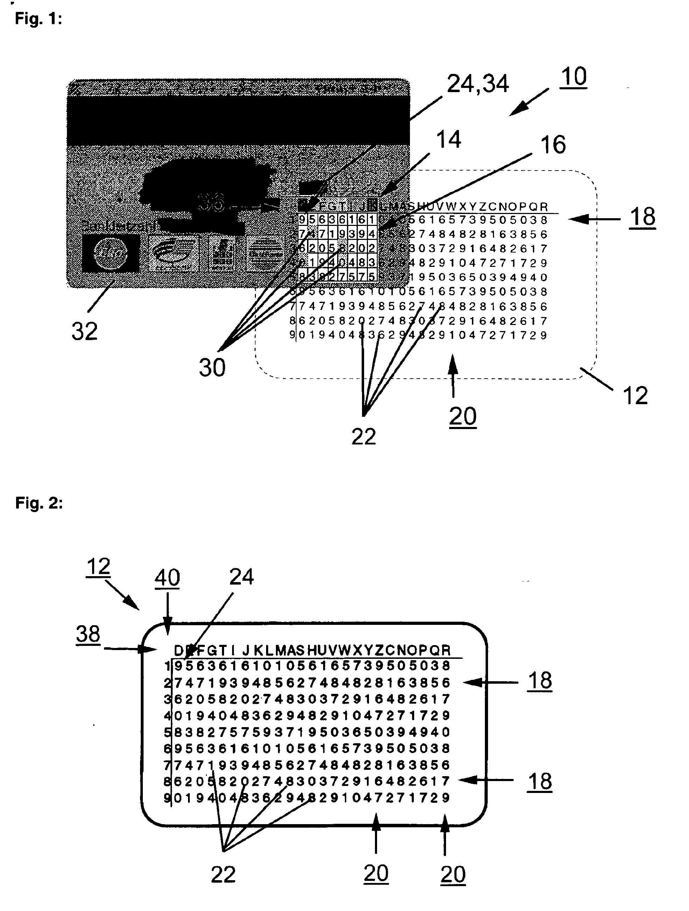

Figur 1 zeigt in einer schematischen Darstellung eine Vorrichtung 10 zur Codierung und Decodierung von Zahlen- und/oder Buchstabenkombinationen, insbesondere zur Codierung und Decodierung von Pin-Codes. Die Vorrichtung 10 besteht dabei aus einer Decodier-Karte 12 und einem Codenummerfeld 14. Die Decodier-Karte 12 besteht aus einer Tabelle 16 mit einer Vielzahl an Zeilen 18 und Spalten 20 (vgl. auch Figur 2). Durch die Zeilen 18 und die Spalten 20 wird eine Vielzahl von Feldern 22 definiert, wobei in den Feldern 22 Buchstaben und Zahlen zufällig angeordnet sind. Das Codenummernfeld 14 besteht aus einem tabellarisch aufgeteilten Feld 26 mit einer Vielzahl von Einzelfeldern 28. In den Einzelfeldern 28 ist ein Schlüssel 30 zur Ablesereihenfolge der auf der Decodier-Karte 12 dargestellten Buchstaben und Zahlen ausgebildet. In dem dargestellten Ausführungsbeispiel besteht der Schlüssel 30 aus verschiedenfarbig unterlegten Feldern 28, wobei sich die Ablesereihenfolge durch eine auf dem Codenummernfeld 14 festgelegten Farbabfolge 36 ergibt. Zur Decodierung der Zahlen- und/oder Buchstabenkombinationen wird ein erster Bezugspunkt 24 der Decodier-Karte 12 auf einen zweiten Bezugspunkt 34 des Codenummernfeldes 14 überlappend aufgebracht. Dabei weist in dem dargestellten Ausführungsbeispiel die Tabelle 16 der Decodier-Karte 12 einen Spalten- und Zeilenkopf 38, 40 auf (vgl. Fig. 2), wobei die einzelnen Spalten 20 und die Zeilen 18 jeweils mit einem Symbol, im vorliegenden Fall mit Buchstaben und Zahlen, bezeichnet sind. Der erste Bezugspunkt 24 ergibt sich dabei aus einer Kombination der mit "D" bezeichneten Spalte 20 mit einer mit "1" bezeichneten Zeile 18. Das resultierende Feld 22, das mit "9" bezeichnet ist, bildet den ersten Bezugspunkt 24. Dieser Bezugspunkt 24 bzw. dieses Bezugsfeld wird auf den zweiten Bezugspunkt bzw. das zweite Bezugsfeld 34, welcher bzw. welches durch die Kombination der ersten Spalte des tabellarisch aufgeteilten Feldes 26 mit der entsprechenden ersten Zeile entsteht, gelegt. Der zweite Bezugspunkt 34 befindet sich also in dem in der Zeichnung dargestellten oberen linken Einzelfeld 28 des Codenummerfeldes 14. Es ist aber auch möglich, dass der zweite Bezugspunkt 34 außerhalb oder auch an anderer Stelle innerhalb des tabellarisch aufgeteilten Feldes 26 zu liegen kommt.

In dem dargestellten Ausführungsbeispiel ist die Decodier-Karte 12 transparent ausgebildet. Nach einem Übereinanderbringen der Bezugspunkte 24 und 34 erkennt man, dass bestimmte Buchstaben bzw. Zahlen der Felder 22 der Decodier-Karte 12 durch den farbig unterlegten Schlüssel 30 hervorgehoben werden. Die Ablesereihenfolge ergibt sich in diesem Fall aus der in der Kopfzeile 36 festgelegten Farbabfolge. Die Farbreihenfolge wäre dann beispielhaft von links nach rechts grün, grau, rosa und gelb. Die entsprechend farbig hinterlegten und zugeordneten Felder 22 würden dann einen Zahlencode von "4080" ergeben. Dabei kann die Ausgestaltung eines durch farbig hinterlegte Felder definierten Schlüssels 30 individuell durch den Benutzer erfolgen oder bereits auf dem Codenummerfeld 14 vorgegeben sein.

Das Codenummernfeld 14 ist in dem dargestellten Ausführungsbeispiel als Aufkleber ausgebildet, der auf einer sogenannten Bank-Karte als Codenummernfeldträger 32 angeordnet ist.

Figur 2 zeigt eine schematische Darstellung der Decodier-Karte 12 der in Figur 1 beschriebenen Vorrichtung 10.

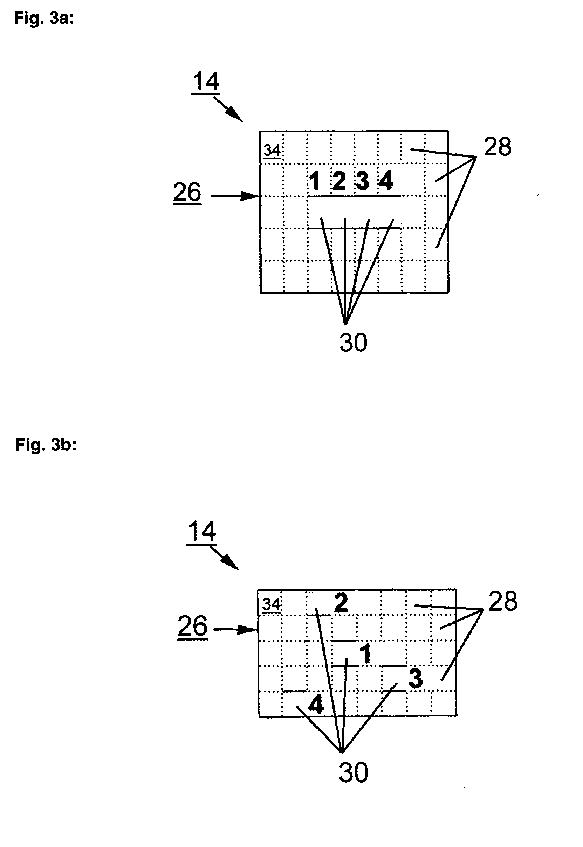

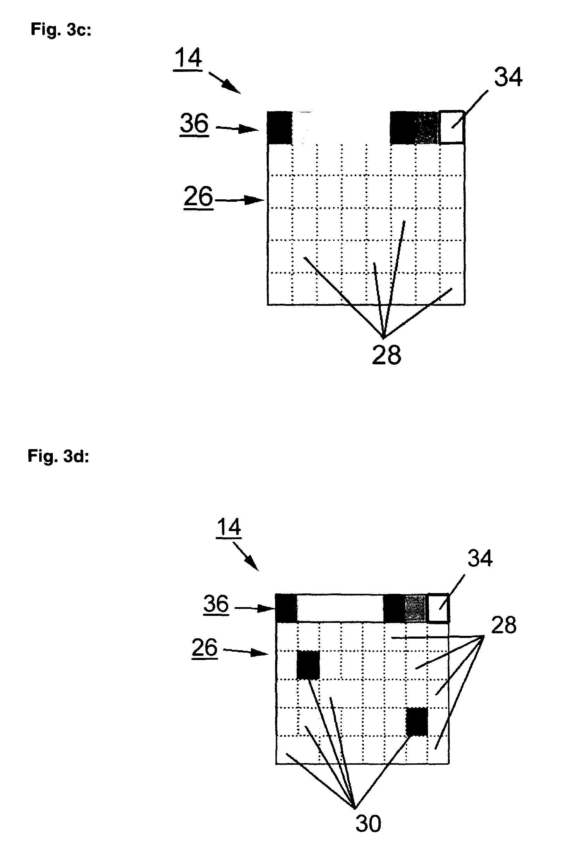

Die Figuren 3a bis 3d zeigen schematische Darstellungen von vier Ausführungsbeispielen von Codenummernfeldern 14. Man erkennt, dass in Figur 3a in dem tabellarisch aufgeteilten Feld 26 ein Schlüssel 30 bestehend aus farbig unterlegten Feldern 28 ausgebildet ist, wobei sich die Ablesereihenfolge durch eine den einzelnen Feldern 28 zugeordnete Zahlenfolge 1 bis 4 ergibt. Der zweite Bezugspunkt 34 kann dabei wieder als Schnittpunkt bzw. Schnittfeld der ersten Spalte mit der ersten Zeile des tabellarisch aufgeteilten Feldes 26 ausgebildet und definiert werden. In Figur 3b ist ein tabellarisch aufgeteiltes Feld 26 mit einem Schlüssel 30 dargestellt, wobei der Schlüssel 30 wiederum aus farbig unterlegten Feldern 28 besteht und die Ablesereihenfolge sich durch eine den einzelnen Feldern 28 zugeordnete Zahlenfolge 1 bis 4 ergibt. In Figur 3c weist das tabellarisch aufgeteilte Feld 26 eine Kopfzeile mit einer festgelegten Farbabfolge 36 auf. Die Farbabfolge 36 bestimmt wiederum die Ablesereihenfolge der verschiedenfarbig unterlegten Felder 28 und ergibt so den Schlüssel 30. In Figur 3d ist Letzteres dargestellt. Das in Figur 3c dargestellte Codenummernfeld 14 ist als sogenanntes "Bianko-Feid" ausgebildet, d.h. es können durch individuelle farbliche Hinterlegung der Einzelfelder 28 entsprechende individuelle Zahlenkombinationen codiert und decodiert werden. In den Figuren 3c und 3d wurde zudem der zweite Bezugspunkt 34 als ein Feld außerhalb des tabellarisch eingeteilten Feldes 26 im Bereich der Farbabfolge 36 definiert.

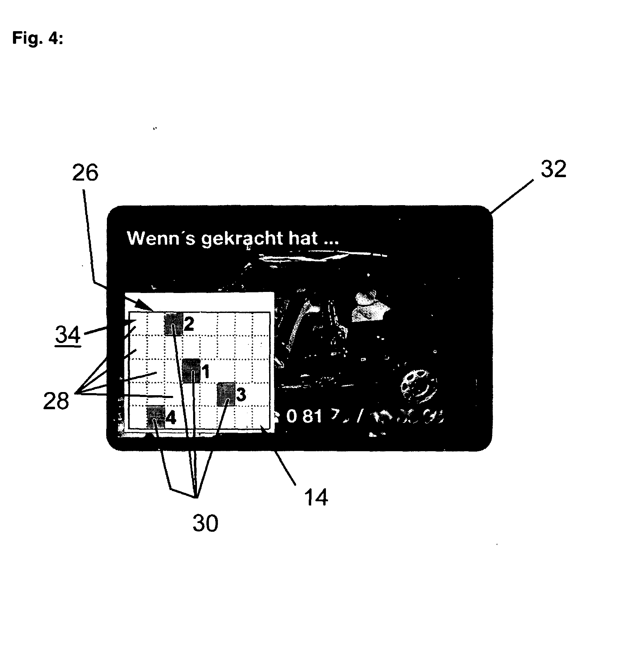

Figur 4 zeigt eine schematische Darstellung eines auf einen Codenummernfeldträger 32 aufgebrachten Codenummernfeldes 14 gemäß dem in Figur 3d dargestellten Ausführungsbeispiel.

## Patentansprüche

1. Vorrichtung zur Codierung und Decodierung von Zahlen- und/oder Buchstabenkombinationen, insbesondere zur Codierung und Decodierung von Pin-Codes,
**dadurch gekennzeichnet,**
**dass** die Vorrichtung (10) aus einer Decodier-Karte (12) und einem Codenummernfeld (14) besteht, wobei die Decodier-Karte (12) mindestens eine Tabelle (16) bestehend aus jeweils mindestens zwei Zeilen (18) und Spalten (20) zur Definition einer Vielzahl von Feldern (22) aufweist und in den Feldern (22) Buchstaben und Zahlen zufällig angeordnet sind und auf der Decodier-Karte (12) ein vordefinierter erster Bezugspunkt (24) ausgebildet ist und das Codenummernfeld (14) aus einem tabellarisch aufgeteilten Feld (26) mit einer Vielzahl von Einzelfeldern (28) besteht und in den Einzelfeldern (28) ein Schlüssel (30) zur Ablesereihenfolge der auf der Decodier-Karte (12) dargestellten Buchstaben und Zahlen ausgebildet ist, wobei zur Decodierung der Zahlen- und/oder Buchstabenkombination der erste Bezugspunkt (24) der Decodier-Karte (12) auf einen zweiten Bezugspunkt (34) des Codenummernfelds (14) überlappend aufgebracht wird und die Decodier-Karte (12) und/oder das Codenummernfeld (14) transparent ausgebildet ist.

2. Vorrichtung nach Anspruch 1,
**dadurch gekennzeichnet,**
**dass** die Tabelle (16) der Decodier-Karte (12) einen Spalten- und Zeilenkopf (38, 40) aufweist, wobei die einzelnen Spalten (20) und Zeilen (18) jeweils mit einem Symbol, insbesondere mit figurativen Elementen, Sonderzeichen, Buchstaben und Zahlen bezeichnet sind.

3. Vorrichtung nach einem der Ansprüche 1 und 2,
**dadurch gekennzeichnet,**
**dass** der erste und/oder der zweite Bezugspunkt (24, 34) als feststehende Markierung auf der Decodier-Karte (12) und dem Codenummernfeld (14) ausgebildet sind.

4. Vorrichtung nach Anspruch 2 oder 3,
**dadurch gekennzeichnet,**
**dass** eine Kombination aus mindestens einer Spaltenbezeichnung mit mindestens einer Zeilenbezeichnung den ersten Bezugspunkt (24) ausbildet.

5. Vorrichtung nach einem der vorhergehenden Ansprüche,
**dadurch gekennzeichnet,**
**dass** der zweite Bezugspunkt (34) der Schnittpunkt einer Spalte und einer Zeile in oder außerhalb des Feldes (26) des Codenummernfeldes (14) ist.

6. Vorrichtung nach einem der vorhergehenden Ansprüche,
**dadurch gekennzeichnet,**
**dass** der Schlüssel (30) aus farbig unterlegten Feldern (28) besteht, wobei sich die Ablesereihenfolge durch eine den einzelnen Feldern (28) zugeordneten Zahlenfolge ergibt.

7. Vorrichtung nach einem der Ansprüche 1 bis 5,
**dadurch gekennzeichnet,**
**dass** der Schlüssel (30) aus verschiedenfarbig unterlegten Feldern (28) besteht, wobei sich die Ablesereihenfolge durch eine auf dem
Codenummernfeld (14) festgelegten Farbabfolge (36) ergibt.

8. Vorrichtung nach Anspruch 7,
**dadurch gekennzeichnet,**
**dass** der Schlüssel (30) aus verschiedenfarbig unterlegten Feldern (28) besteht, wobei sich die Ablesereihenfolge durch eine den einzelnen Feldern (28) zugeordneten Farbabfolge und einer den einzelnen Feldern (28) zugeordneten Zahlenfolge ergibt.

9. Vorrichtung nach einem der vorhergehenden Ansprüche,
**dadurch gekennzeichnet,**
**dass** das Codenummernfeld (14) als Aufkleber ausgebildet ist.

10. Verfahren zur Codierung und Decodierung von Zahlen- und/oder Buchstabenkombinationen, insbesondere zur Codierung und Decodierung von Pin-Codes,
**dadurch gekennzeichnet,**
**dass** das Verfahren folgende Schritte umfasst:
a) Bereitstellung einer Decodier-Karte (12) umfassend mindestens eine Tabelle (16) bestehend aus jeweils mindestens zwei Zeilen (18) und Spalten (20) zur Definition einer Vielzahl von Feldern (22), wobei in den Feldern (22) Buchstaben und Zahlen zufällig angeordnet sind und auf der Decodier-Karte (12) ein vordefinierter erster Bezugspunkt (24) ausgebildet ist;
b) Bereitstellung eines Codenummernfeldes (14) bestehend aus einem tabellarisch eingeteilten Feld (26) mit einer Vielzahl von Einzelfeldern (28), wobei in den Einzelfeldern (28) ein Schlüssel (30) zur Ablesereihenfolge der auf der Decodier-Karte (12) dargestellten Buchstaben und Zahlen ausgebildet ist;
c) Auflegen der Decodier-Karte (12) auf das Codenummernfeld (14), wobei der erste Bezugspunkt (24) mit einem zweiten Bezugspunkt (34) des Codenummernfeldes (14) zur Deckung kommt;
d) Ablesen der mit Hilfe des Schlüssels (30) angezeigten Zahlen- und/oder Buchstabenkombination.

11. Verfahren nach Anspruch 10,
**dadurch gekennzeichnet,**
**dass** im Verfahrensschritt c) das Codenummernfeld (14) auf die Decodier-Karte (12) aufgelegt wird.

12. Verfahren nach Anspruch 10 oder 11,
**dadurch gekennzeichnet,**
**dass** die Tabelle (16) der Decodier-Karte (12) einen Spalten- und Zeilenkopf (38, 40) aufweist, wobei die einzelnen Spalten (20) und Zeilen (18) jeweils mit einem Symbol, insbesondere mit figurativen Elementen, Sonderzeichen, Buchstaben und Zahlen bezeichnet sind.

13. Verfahren nach einem der Ansprüche 10 bis 13,
**dadurch gekennzeichnet,**
**dass** der erste und/oder der zweite Bezugspunkt (24, 34) als feststehende Markierung auf der Decodier-Karte (12) und dem Codenummernfeld (14) ausgebildet sind.

14. Verfahren nach Anspruch 12 oder 13,
**dadurch gekennzeichnet,**
**dass** eine Kombination aus mindestens einer Spaltenbezeichnung mit mindestens einer Zeilenbezeichnung den ersten Bezugspunkt (24) ausbildet.

15. Verfahren nach einem der Ansprüche 10 bis 14,
**dadurch gekennzeichnet,**
**dass** der zweite Bezugspunkt (34) der Schnittpunkt einer Spalte und einer Zeile in oder außerhalb des Feldes (26) des Codenummernfeldes (14) ist.

16. Verfahren nach einem der Ansprüche 10 bis 15,
**dadurch gekennzeichnet,**
**dass** der Schlüssel (30) aus farbig unterlegten Einzelfeldern (28) besteht, wobei sich die Ablesereihenfolge durch eine den einzelnen Feldern (28) zugeordneten Zahlenfolge ergibt.

17. Verfahren nach einem der Ansprüche 10 bis 15,
**dadurch gekennzeichnet,**
**dass** der Schlüssel (30) aus verschiedenfarbig unterlegten Einzelfeldern (28) besteht, wobei sich die Ablesereihenfolge durch eine auf dem Codenummernfeld (14) festgelegten Farbabfolge (36) ergibt.

18. Verfahren nach Anspruch 17,
**dadurch gekennzeichnet,**
**dass** der Schlüssel (30) aus verschiedenfarbig unterlegten Feldern (28) besteht, wobei sich die Ablesereihenfolge durch eine den einzelnen Feldern (28) zugeordneten Farbabfolge und einer den einzelnen Feldern (28) zugeordneten Zahlenfolge ergibt.
